Europäisches Patentamt

European Patent Office

Office européen des brevets

(19)

(11) Publication number: **0 043 688**
**B1**

# (12) EUROPEAN PATENT SPECIFICATION

(45) Date of publication of patent specification: **19.02.86**

(51) Int. Cl.⁴: **B 60 R 22/02, B 60 R 22/36**

(21) Application number: **81302943.6**

(22) Date of filing: **29.06.81**

(54) Vehicle seat belt system with belt clamp.

| | |
|---|---|
| (30) Priority: **03.07.80 JP 92921/80 u**<br>**24.09.80 JP 134793/80 u**<br>**19.11.80 JP 164812/80 u** | (73) Proprietor: **Takata Kojyo Co., Ltd.**<br>**No. 10 Mori Building 1-18-1 Toranomon**<br>**Minato-ku Tokyo 105 (JP)** |
| (43) Date of publication of application:<br>**13.01.82 Bulletin 82/02** | (72) Inventor: **Takada, Juichiro**<br>**3-12-1 Shinmachi Setagayaku**<br>**Tokyo 105 (JP)** |
| (45) Publication of the grant of the patent:<br>**19.02.86 Bulletin 86/08** | (74) Representative: **Jennings, Roy Alfred et al**<br>**GILL JENNINGS & EVERY 53-64 Chancery Lane**<br>**London WC2A 1HN (GB)** |
| (84) Designated Contracting States:<br>**BE CH DE FR GB IT LI NL SE** | |
| (56) References cited:<br>**FR-A-2 277 601**<br>**FR-A-2 315 957**<br>**FR-A-2 446 648**<br>**GB-A-2 064 943**<br>**US-A-3 504 867**<br>**US-A-4 243 185** | |

Courier Press, Leamington Spa, England.

## Description

The present invention relates to vehicle seat belt systems having an emergency locking belt retractor and a belt clamp for operation in conjunction with the belt retractor.

During the past few years the safety seat belt systems with which most vehicles have been equipped have employed emergency locking belt retractors, that is retractors of the type in which the belt is wound on a reel which locks automatically in response either to abrupt acceleration of the belt in the unwinding direction or to an abrupt acceleration of the vehicle, events that are most often associated with a vehicle collision. Emergency locking retractors have the advantage of allowing the belted occupant to lean forward in the vehicle rather than being strapped in with no opportunity for such movement without undoing the belt. Moreover, in general they make it easier to fasten the belt when the occupant enters the vehicle. They have been recognized as being entirely safe and effective. Some emergency locking retractors are constructed to respond to both acceleration of the belt and acceleration of the vehicle.

One problem with emergency locking retractors, and also with some other types of retractor, is that they permit a significant increase of the extended length of the belt in a collision due to the tightening of the several turns of the belt remaining on the belt reel. The turns of the belt which remain wrapped around the reel when the belt is fastened up are comparatively loose, and the very high forces imposed on the belt in a collision are sufficient to tighten these turns considerably, thereby allowing a length of the belt to withdraw from the belt reel even though the reel is locked against rotation by the emergency locking mechanism.

This problem of emergency locking retractors of allowing some pull-out of the belt following locking of the retractor due to tightening of the belt which remains on the reel is not particularly serious in the case of fixed belt systems, inasmuch as the number of turns of the belt which remain on the reel when the belt is fastened is comparatively small. On the other hand, in some passive systems a significant number of turns remain on the reel when it is in the restraining configuration, these turns being required to enable the belt to be pulled out when it is transferred from the restraining to the releasing configuration. The greater number of comparatively loose turns of the belt on the reel increases the seriousness of the problem of unwanted belt extension.

There have been various proposals for providing some sort of clamp in association with the emergency locking retractor to reduce or eliminate the release of a length of belt from the reel due to tightening of the remaining turns on the reel, but many have been unsatisfactory either because they do not fully lock the belt but instead let it slip, or because they present the possibility of failure of the belt in the event of a very high pull-out force. Others which are adequate to withstand the pull-out force reasonably well without belt failure do not release easily, which is an inconvenience for the occupant who has to release the belt by hand each time the device is activated.

For example, FR—A—2 315 957 discloses vehicle seat belt clamps comprising an U-shaped frame having a pair of slide members, and a pair of clamping jaws between which the belt passes, one of the jaws being fixed to the frame and the other jaw being mounted on a lever for movement towards and away from the fixed clamping jaw, the lever forming part of a clamp actuating mechanism including a turning roll around which the belt is looped and which is mounted on a shaft carried by the lever, which in turn is mounted on the frame for rotation about an axis transverse to the side members of the frame and parallel to the axis of the turning roll to permit the turning roll to move in a direction which is the same in sense as the pull-out direction of the belt from the roll, and at least one spring urging the turning roll in the opposite direction, the arrangement being such that when the retractor is locked and the pull-out force on the belt exceeds a predetermined level, the turning roll is moved by the belt against the spring bias acting on the roll and causes the lever to move the movable clamping jaw towards the fixed clamping jaw and thereby clamp the belt between the jaws to prevent pulling of the belt from the retractor.

The aim of the present invention is to provide a belt clamp which avoids the disadvantage of the prior art described earlier and is reliable in operation, and which can be realised in a simple and practical manner.

To this end, according to the invention, a vehicle seat belt system having an emergency locking retractor and a belt clamp for operation in conjunction with the retractor, the belt clamp comprising a U-shaped frame having a pair of side members, a pair of clamping jaws between which the belt passes, one of the jaws being fixed to the frame and the other jaw being mounted for movement towards and away from the fixed clamping jaw, and a clamp actuating mechanism including a turning roll around which the belt is looped and which is mounted on a shaft carried by a lever assembly which in turn is mounted on the frame for rotation about an axis transverse to the side members of the frame and parallel to the axis of the turning roll to permit the turning roll to move in a direction which is the same in sense as the pull-out direction of the belt from the roll, and at least one spring urging the turning roll in the opposite direction, the arrangement being such that when the retractor is locked and the pull-out force on the belt exceeds a predetermined level, the turning roll is moved by the belt against the spring bias acting on the roll and causes the clamp-actuating mechanism to move the movable clamping jaw towards the fixed clamping jaw and thereby clamp the belt between the jaws to prevent pulling of the belt from the retractor, is characterised in that the movable clamping jaw is mounted directly on the frame so that it is guided to move towards and away from the fixed jaw and has a cam surface engageable by a camming surface on the clamp actuating mechanism to move the movable jaw towards the fixed jaw when the clamp actuating mechanism is actuated, the lever assembly comprises a pair of spaced levers which are situated one at each side of the frame and are substantially rigidly joined together, and the turning roll shaft is carried by the levers and has its ends received in matching guide slots in the side members of the frame.

With this arrangement, when the turning roll is moved against its bias by excessive pull-out force on the belt, the roll can only move by means of the levers pivoting about their axis, which is fixed relative to the frame, and since the axis of the roll is maintained parallel to the axis of rotation of the levers and the movable clamping jaw is cammed towards the fixed jaw along a guide path, the clamping force applied by the clamping jaws will be substantially even both across and along the belt irrespective of the magnitude of the force applied to the turning roll by the belt and whether the force is even across it.

The force applied to the clamp actuating mechanism by the belt may be transmitted to the movable clamping jaw either by engagement of the turning roll with a cam surface on the movable clamping jaw or by engagement between the levers and portions of the movable clamping jaw. Preferably the movable jaw is biased towards a retracted position away from the belt and the fixed jaw, either by spring means or by mounting it on the frame in such a way that it will fall to the retracted position under gravity.

Advantageously, the movable jaw may be mounted on the frame by means of laterally outwardly projecting lugs which extend into corresponding guide slots in the side members of the frame. These guide slots in the side members can be of such a length and position that they are engaged at one end by the lugs on the movable clamping jaw when the spacing between the movable clamping jaw and the fixed clamping jaw is just a little less than the thickness of the belt. In such an arrangement, the ends of the guide slots constitute stops which limit the extent of movement of the movable jaw towards the fixed jaw and insure against the imposition of an undesirably high clamping force imposed by the jaws on the belt.

The levers are preferably joined together by a cross-piece which is integral with the levers, in which case the levers and cross piece may constitute a generally U-shaped element.

It is desirable to provide guide surfaces on the side members of the frame located adjacent the edges of the belt as it leads from the turning roll and engageable with the edges of the belt to keep it tracking properly on the turning roll and to prevent it from running off either side.

A number of examples of belt clamps of seat belt systems in accordance with the present invention will now be described with reference to the accompanying drawings, in which:—

Figure 1 is a side-elevation of a first embodiment of the present invention, showing the belt clamp in its retracted, inactive condition;

Figure 2 is a view similar to that of Figure 1 but in which the belt clamp is in its active, clamping configuration;

Figure 3 is a side-elevation of a second embodiment of the invention, showing the belt clamp in the retracted condition;

Figure 4 is a view similar to that of Figure 3 but showing the belt clamp in the clamping condition;

Figure 5 is a side elevation of a third embodiment of the invention, showing the belt clamp in the retracted position;

Figure 6 is a cross-sectional view of the belt clamp shown in Figure 5 taken generally along the lines 6—6 of Figure 5 and looking in the direction of the arrows;

Figure 7 is a side elevation of the belt clamp of Figures 5 and 6 showing it in the clamping position;

Figure 8 is a detail view of the belt clamp of Figures 5 to 7 illustrating a feature which is also applicable to the other embodiments; and,

Figure 9 is a top view of an alternative construction for the frame of the belt clamp shown in Figures 5 to 7 or in of the other embodiments.

All of the embodiments of the present invention shown in the drawings involve a belt clamp that is integrated in a combined retractor and belt clamp assembly, but it will be understood by those skilled in the art that the belt clamp may be a separate assembly located in a different position in the vehicle from the retractor of the seat belt system, there being a run of belt extending from the retractor to the clamp. There are, however, obvious advantages to integrating the belt clamp and the retractor in a single assembly. In each of the embodiments shown in the drawings, the retractor is not shown in detail but is generally designated by the reference numeral 40 and may be of any of a variety of types comprising a belt pull-out sensitive locking mechanism, an inertia-sensitive mechanism, or both.

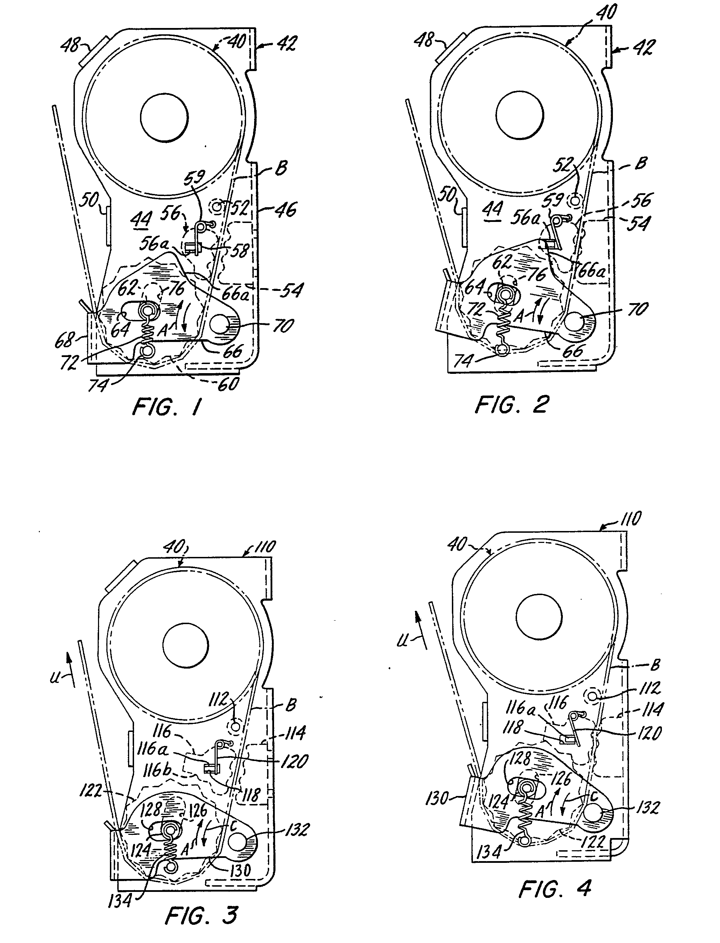

In the embodiment shown in Figures 1 and 2, the retractor 40 is mounted in a generally U-shaped frame 42 comprising a pair of transversely spaced-apart side members 44 (one one of which is shown) and a base member 46. Stiffener plates 48 and 50 extend across the space between the free ends of the side members.

The belt B leads generally downwardly from the retractor reel past a guide roller 52 and through a space between a fixed clamping jaw 54 which is firmly fixed to the base 46 of the frame and a movable clamping jaw 56 which is mounted by means of laterally outwardly extending lugs 56a projecting through corresponding elongated slots 58 in the side members of the frame for movement between a retracted position (Figure 1) and a clamping position (Figure 2). In its retracted position the movable jaw is separated some distance from the fixed jaw 54 to allow the belt to pass freely through the gap between the jaws, and in its clamping position the belt is gripped between complementary, corrugated gripping surfaces on the jaws. A spring 59 in each side of the frame engages the corresponding lug 56a and urges the movable jaw 56 into the retracted position.

After passing between the jaws, the belt extends around a corrugated turning roll 60, making nearly a complete U turn so that it leads off the turning roll in a generally upward direction. The shaft 62 of the turning roll 60 extends laterally outwardly from each end of the roll through guide slots 76 in the side members of the frame and into elongated holes or slots 64 in a pair of levers 66 located one at each side of the frame 42 on the outside of the corresponding side member 44. The guide slots 76 extend generally parallel to the path of the incoming segment of the belt, i.e. its path between the guide roller 52 and the turning roll 60, and the guide slots 64 in the levers 66 lie generally transverse to the guide slots 76. The levers 66 are rigidly interconnected by a cross piece 68 to form a U-shaped member, which is preferably a unitary member formed by stamping and · bending a metal plate of appropriate strength. The U-shaped lever member is mounted for rotation on the side frame members by a shaft 70 having its axis transverse to the side members and parallel to the axis of the belt reel of the retractor 40. The levers 66 and the turning roll 60 together constitute a clamp-actuating mechanism which is normally held in a retracted position (Figure 1) by a pair of springs 72 fastened between the outer ends of the shaft 62 of the turning roll and pins 74 on the side members of the frame.

During normal pulling out and retraction of the belt, the forces of the springs 72 are sufficient to resist the force of the belt acting on the turning roll 60 and hold the roll in its retracted position (Figure 1). However, when the retractor 40 locks in the event of a collision, upset, sudden stop, or some other emergency, and a force is exerted on the belt in the pull-out direction sufficient to overcome the forces of the springs 72, the clamp actuating mechanism will pivot in the direction indicated by the arrow A about the shaft 70. After a relatively small pivotal movement, cam surfaces 66a on the levers 66 engage the lugs 56a on the ends of the movable clamping jaw 56, and upon additional pivotal movement in the direction A the mechanism urges the movable clamping jaw against the force of the springs 59 into engagement with the belt B and ultimately clamps the belt between the corrugated gripping surfaces of the movable jaw 56 and the fixed jaw 54. Such clamping engagement produces a high frictional force which prevents any unwinding of the belt from the retractor 40, and the magnitude of the frictional clamping force on the belt increases in proportion to the magnitude of the force tending to pull the belt from the belt clamp.

Upon release of the pull-out force on the belt the springs 72 shift the clamp actuating mechanism back to the retracted position. In operation of the mechanism, the rigid connection between the levers 66 ensures that the turning roll 60 will translate along a prescribed path without any significant cocking, thereby maintaining a substantially uniform force across the width of the clamping jaws, even though the belt may be tending to be pulled out in a direction oblique to a plane perpendicular to the axis of the retractor reel and the shaft 70.

The embodiment shown in Figure 3 comprises a U-shaped frame 110 carrying the emergency locking retractor 40 from which the belt B runs off generally downwardly past a guide roller 112 and between a fixed clamping jaw 114 and a movable clamping jaw 116 which is mounted for movement towards and away from the fixed clamping jaw by means of lugs 116a projecting through slots 118 in the side members of the frame. A spring 120 on each side of the frame urges the movable clamping jaw 116 in a direction away from the fixed clamping jaw 114.

The belt then extends in a substantially U-turn around a turning roll 122 mounted on a shaft 124 which extends from both ends of the roll through guide slots 126 in the side members of the frame and into slots 128 in the two arms of a generally U-shaped lever 130 mounted to pivot on the frame by an axle 132. Springs 134 on each side of the frame bias the lever 130 in a counter-clockwise direction indicated by the arrow C, but will yield upon the imposition of a relatively high force on the belt in the pull-out direction U. When the emergency locking retractor 40 is locked and a high pull-out force is imposed on the belt B, the clamp-actuating mechanism (constituted by the turning roll 122 and the lever 130) pivots clockwise in the direction of the arrow A about the axis of the axle 132 and thereby brings the corrugated surface of the turning roll 122 into engagement with a correspondingly corrugated camming surface 116b on the movable clamping jaw 116. The camming action of the turning roll on the movable clamping jaw forces the movable clamping jaw towards the fixed clamping jaw 114 to frictionally clamp the belt between them and preventing the belt from being pulled off the reel.

When the high force on the belt in the pull-out direction ceases, the springs 134 pull the clamp-actuating mechanism counter clockwise to release the movable clamping jaw, which is then pushed away from the fixed clamping jaw by the springs 120 to release the belt.

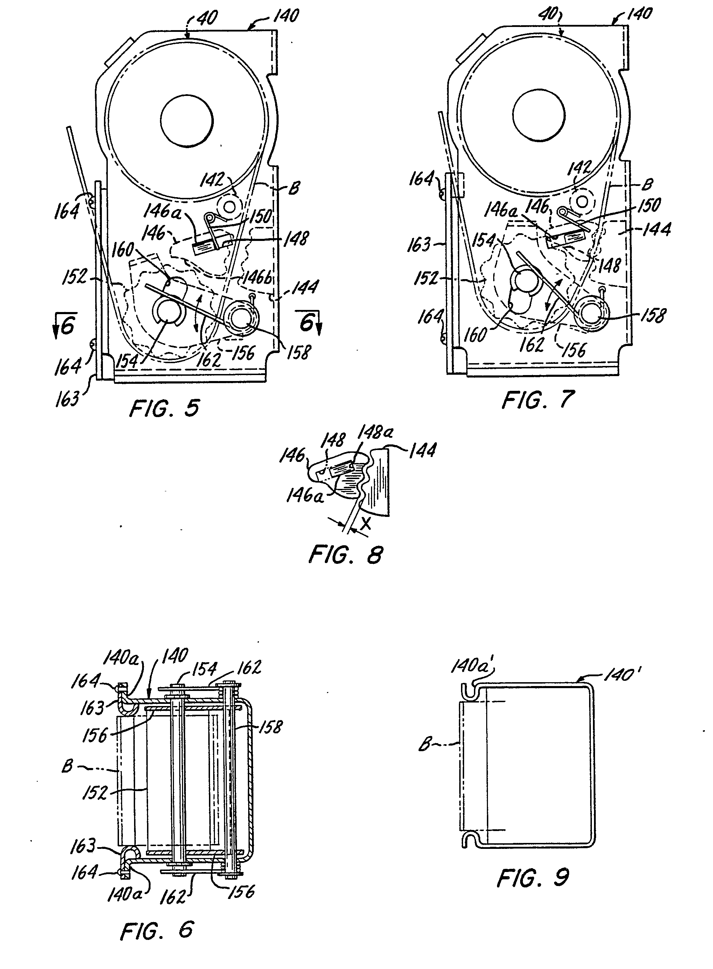

The retractor and belt clamp assembly shown in Figures 5 to 8 comprises a U-shaped frame 140 carrying the emergency locking retractor 40 in the upper region and the belt clamping mechanism in the lower region. The belt B leads generally downwardly from the retractor past a belt turning roll 152 which serves to establish a predetermined path for the belt between a fixed clamping jaw 144 and a movable clamping jaw 146, regardless of the number of turns of the belt on the belt reel of the retractor 40. Lugs 146a extending outwardly from the movable clamping jaw into slots 148 in the side members of the frame mount the movable jaw in the frame and enable it to translate along the slots 148 towards the fixed clamping jaw when a force is imposed upon the movable clamping jaw sufficient to overcome the force of springs 150 which normally hold the movable clamping jaw away from the fixed clamping jaw and allow the belt to move freely between the gripping surfaces of the jaws.

The belt extends around a turning roll 152 so that it makes a substantially U-shaped turn. The shaft 154 of the turning roll 152 extends outwardly at opposite ends of the roll through mounting holes in the arms of a U-shaped lever 156 which is pivotally mounted in the frame by an axle 158. The U-shaped lever 156 is mounted between the side frame members, and the present embodiment differs in this respect from the embodiments described earlier. The end portions of the shaft 154 also extend through guide slots 160 in the side members of the frame, and a spring 162 on each side of the frame urges the lever in a counter clockwise direction about the axle 158, thereby normally retaining the clamp-actuating mechanism in an inactive condition out of engagement with the movable clamping jaw 146.

In an emergency which produces locking of the retractor 40 and a relatively high force on the belt B in the pull-out direction, the force of the springs 162 is overcome and the clamp actuating mechanism pivots clockwise about the axle 158 to bring the corrugated surface of the turning roll 152 into engagement with a camming surface 146b on the movable clamping jaw. The movable clamping jaw is thus cammed towards the fixed clamping jaw to frictionally clamp the belt between the corrugated gripping surfaces of the jaws, as shown in Figure 7. The clamping mechanism automatically returns to the belt-releasing position shown in Figure 5 when the high pull-out force on the belt B ceases.

As shown in Figure 6, it is advantageous to provide guides on each side of the frame 140 to ensure that the belt B tracks the turning roll 152 correctly, even though it might be tending to be pulled out from the assembly in a direction oblique to the axis of the turning roll. For this purpose, each side member of the frame 140 has an outwardly extending flange 140a along its free edge in the lower portion of the frame, and a generally J-sectioned guide member 163 is fastened, such as by rivets 164, to each of the flanges 140a. Alternatively, as shown in Figure 9, each side member of the frame 140' may be formed with a generally C-shaped flange 140a' adjacent the path of the belt as it leads upwardly and outwardly from the turning roll. Each guide member 163 or C-shaped flange 140a' presents a smooth guiding surface for the edge of the belt that runs out from the turning roll.

In each of the embodiments described above and shown in the accompanying drawings, the slots in the side members of the frame which receive the lugs on the movable clamping jaw may be of a size and position such as to limit the movement of the movable clamping jaw towards the fixed clamping jaw, thereby insuring that an excessive clamping cannot be applied to the belt. This concept is illustrated more clearly in Figure 8 of the drawings, in which the minimum possible distance between the jaws is indicated by the dimension labelled X, and is controlled by the position of the end 148a of each slot 148. Generally the minimum clearance X between the movable clamping jaw and the fixed clamping jaw will be just slightly less than the thickness of the belt.

It will be appreciated from the foregoing description that the present invention provides a belt clamp that is of relatively simple construction, small in size, light in weight, reliable in operation even when the pull-out force on the belt tends to pull it skew to its normal path, and that can readily be assembled as a sub-assembly of a single unit with an emergency locking retractor.

**Claims**

1. A vehicle seat belt system having an emergency locking retractor (40) and a belt clamp for operation in conjunction with the retractor, the belt clamp comprising a U-shaped frame (42; 110; 140) having a pair of side members (44), a pair of clamping jaws (54, 56; 114, 116; 144, 146) between which the belt (B) passes, one of the jaws (54; 114; 144) being fixed to the frame and the other jaw (56; 116; 146) being mounted for movement towards and away from the fixed clamping jaw, and a clamp actuating mechanism including a turning roll (60; 122; 152) around which the belt is looped and which is mounted in a shaft (62; 124; 154) carried by a lever assembly (66, 68; 130; 156) which in turn is mounted on the frame for rotation about an axis (70; 132; 158) transverse to the side members of the frame and parallel to the axis of the turning roll to permit the turning roll to move in a direction which is the same in sense as the pull-out direction of the belt from the roll, and at least one spring (72; 134; 162) urging the turning roll in the opposite direction, the arrangement being such that when the retractor is locked and the pull-out force on the belt exceeds a predetermined level, the turning roll is moved by the belt against the spring bias acting on the roll and causes the clamp-actuating mechanism to move the movable clamping jaw towards the fixed clamping jaw and thereby clamp the belt between the jaws to prevent pulling of the belt from the retractor, characterised in that the movable clamping jaw (56; 116; 146) is mounted directly on the frame (42; 110; 140) so that it is guided to move towards and away from the fixed jaw (54; 115; 144) and has a cam surface (56a; 116b, 146b) engageable by a camming surface (66a, 122; 152) on the clamp actuating mechanism to move the movable jaw towards the fixed jaw when the clamp actuating mechanism is actuated, the lever assembly comprises a pair of spaced levers (66; 130; 156) which are situated one at each side of the frame (42; 110; 140) and are substantially rigidly joined together, and the turning roll shaft (62; 124; 154) is carried by the levers (66; 130; 156) and has its ends received in matching guide slots (76; 126; 160) in the side members (44) of the frame.

2. A seat belt system according to Claim 1, in which it is a surface of the turning roll (122; 152) which engages the cam surface (116*b*; 146*b*) on the movable clamping jaw (116; 146) to move it towards the fixed jaw (114; 144).

3. A seat belt system according to Claim 2, in which the turning roll (122) has a corrugated surface, and the cam surface (116*b*) on the movable clamping jaw (116) which is engaged by the turning roll is correspondingly corrugated to enhance the transmission of force from the turning roll to the movable jaw.

4. A seat belt system according to Claim 1, in which it is cam surfaces (66*a*) on the levers (66) which engage portions (56*a*) of the movable clamping jaw (56) to move the jaw towards the fixed jaw (54).

5. A seat belt system according to any one of the preceding Claims in which the shaft (62; 124) of the turning roll (60; 122) is received in matching guide slots (64; 128) in the levers (66; 130) which are transverse to the guide slots (76; 126) in the side members of the frame.

6. A seat belt system according to any one of the preceding Claims, in which at least one spring (59; 120; 150) biases the movable clamping jaw (56; 116; 146) in a direction away from the fixed clamping jaw (54; 114; 144).

7. A seat belt system according to any one of the preceding Claims, in which the movable jaw (56; 116; 146) is mounted on the frame (42; 110; 140) by means of laterally outwardly projecting lugs (56*a*; 116*a*; 146*a*) which extend into guide slots (58; 118; 148) in the slide members of the frame.

8. A seat belt system according to Claim 7, in which in sizes and locations of the lugs (56*a*; 116*a*; 146*a*) and their guide slots (58; 118; 148) are such as to limit the extent of movement of the movable jaw (56; 116; 146) towards the fixed jaw (54; 114; 144) to prevent excessive clamping forces from being imposed on the belt (B) between the jaws.

9. A seat belt system according to any one of the preceding Claims, in which the levers (66; 130; 156) are joined together by a cross-piece (68) which is integral with the levers so that the levers and cross-piece constitute a unitary, generally U-shaped element (66, 68; 130; 156).

10. A seat belt system according to any one of the preceding Claims, in which there are guide surfaces (163; 140*a'*) on the side members of the frame (140; 140') located adjacent the edges of the belt (B) as it leads from the turning roll (152) and engageable therewith to prevent it from running off either side of the turning roll.

11. A seat belt system according to any one of the preceding Claims, in which the retractor (40) and the belt clamp are mounted on a common U-shaped frame (42; 110; 140).

**Revendications**

1. Ceinture de sécurité pour siège de véhicule ayant un réenrouleur (40) à verrouillage d'urgence et un dispositif de serrage de sangle, destiné à fonctionner en coopération avec le réenrouleur, le dispositif de serrage de sangle comprenant un châssis en U (42; 110; 140) ayant deux organes latéraux (44), deux mâchoires de serrage (54, 56; 114, 116; 144, 146) entre lesquelles passe la sangle (B), l'une des mâchoires (54; 114; 144) étant fixée au châssis et l'autre mâchoire (56; 116; 146) étant montée afin qu'elle se déplace en translation par rapport à la mâchoire fixe, et un mécanisme de manoeuvre de dispositif de serrage comprenant un rouleau rotatif (60; 122; 152) autour duquel la sangle forme une boucle et qui est monté sur un arbre (62; 124; 154) porté par un ensemble à levier (66, 68; 130; 156) qui est lui-même monté sur le châssis afin qu'il tourne autour d'un axe (70; 132; 158) transversal aux organes latéraux du châssis et parallèle à l'axe du rouleau rotatif de manière que le rouleau rotatif puisse se déplacer dans le sens d'extraction de la sangle du rouleau, et au moins un ressort (72; 134; 162) repoussant le rouleau rotatif dans l'autre sens, l'arrangement étant tel que, lorsque le réenrouleur est verrouillé et lorsque la force d'extraction appliquée à la courroie dépasse une valeur prédéterminée, le rouleau rotatif est déplacé par la courroie malgré la force de rappel du ressort agissant sur le rouleau et provoque le déplacement par le mécanisme de manoeuvre de la mâchoire mobile vers la mâchoire fixe et ainsi le serrage de la sangle entre les mâchoires qui empêchent l'extraction de la sangle de l'enrouler, caractérisée en ce que la mâchoire mobile (56; 116; 146) de serrage est directement montée sur le châssis (42; 110; 140) afin qu'elle soit guidée en translation par rapport à la mâchoire fixe (54; 115; 144) et possède une surface de came (56a; 116b; 146b) destinée à coopérer avec une surface de came (66a, 122; 152) du mécanisme de manoeuvre de manière que la mâchoire mobile soit déplacée vers la mâchoire fixe lorsque le mécanisme de manoeuvre est manoeuvré, l'ensemble à levier comprenant deux leviers distants (66; 130; 156) placés chacun d'un côté du châssis (42; 110; 140) et raccordés l'un à l'autre d'une manière pratiquement rigide, et l'arbre du rouleau rotatif (62; 124; 154) est porté par les leviers (66; 130; 156) et a des extrémités logées dans des fentes complémentaires de guidage (76; 126; 160) formées dans les organes latéraux (44) du châssis.

2. Ceinture de sécurité selon la revendication 1, dans laquelle c'est une surface du rouleau rotatif (122, 152) qui est au contact de la surface de came (116b; 146b) de la mâchoire mobile (116; 146) afin qu'elle soit déplacée vers la mâchoire fixe (114; 144).

3. Ceinture de sécurité selon la revendication 2, dans laquelle le rouleau rotatif (122) a une surface ondulée, et la surface de came (116b) de la mâchoire mobile (116) qui est au contact du rouleau rotatif est ondulée d'une manière correspondante afin que la transmission de la force du rouleau rotatif à la mâchoire mobile soit accrue.

4. Ceinture de sécurité selon la revendication 1, dans laquelle ce sont les surfaces de came (66a) des leviers (66) qui coopèrent avec des parties (56a) de la mâchoire mobile (56) afin que celle-ci soit déplacée vers la mâchoire fixe (54).

5. Ceinture de sécurité selon l'une quelconque des revendications précédentes, dans laquelle l'arbre (62; 124) du rouleau rotatif (60; 122) est logé dans des fentes complémentaires de guidage (64; 128) formées dans les leviers (66; 130) transversalement aux fentes de guidage (76; 126) formées dans les organes latéraux du châssis.

6. Ceinture de sécurité selon l'une quelconque des revendications précédentes, dans laquelle au moins un ressort (59; 120; 150) rappelle la mâchoire mobile (56; 116; 146) dans le sens qui l'éloigne de la mâchoire fixe (54; 114; 144).

7. Ceinture de sécurité selon l'une quelconque des revendications précédentes, dans laquelle la mâchoire mobile (56; 116; 146) est montée sur le châssis (42; 110; 140) par des pattes (56a, 116a; 146a) dépassant latéralement vers l'extérieur et passant dans les fentes de guidage (58; 118; 148) formées dans les organes latéraux du châssis.

8. Ceinture de sécurité selon la revendication 7, dans laquelle les dimensions et les emplacements des pattes (56a; 116a; 146a) et de leurs fentes de guidage (58; 118; 148) sont tels que l'importance du déplacement de la mâchoire mobile (56; 116; 146) vers la mâchoire fixe (54; 114; 144) est limitée et empêche l'application de forces excessives de serrage à la sangle (B) entre les mâchoires.

9. Ceinture de sécurité selon l'une quelconque des revendications précédentes, dans laquelle les leviers (66; 130; 156) sont raccordés par une traverse (68) qui leur solidaire si bien que les leviers et la traverse constituent un élément unitaire en U (66, 68; 130; 156).

10. Ceinture de sécurité selon l'une quelconque des revendications précédentes, dans laquelle des surfaces de guidage (163; 140a') sont formées sur les organes latéraux du châssis (140; 140') près des bords de la sangle (B) lorsqu'elle sont du rouleau rotatif (152) et sont destinées à coopérer avec ces bords afin que la sangle ne puisse pas s'échapper de part et d'autre du rouleau rotatif.

11. Ceinture de sécurité selon l'une quelconque des revendications précédentes, dans laquelle le réenrouleur (40) et le dispositif de serrage de sangle sont montés sur un châssis commun en U (42; 110; 140).

**Patentansprüche**

1. Kraftfahrzeugsicherheitsgurtsystem mit einem Notfallverriegelungsrückzug (40) und einer Gurtklemme zum Betrieb in Verbindung mit dem Rückzug, wobei die Gurtklemme einen V-förmigen Rahmen (42; 110, 140) umfaßt, der ein Seitengliederpaar (44), ein Klemmbackenpaar (54, 56; 114, 116; 144, 146) besitzt, zwischen denen der Gurt (B) hindurchläuft, wobei eine Backe (54; 114; 144) am Rahmen befestigt und die andere Backe (56; 116; 146) zur Bewegung in Richtung auf und weg von der befestigen Klemmbacke befestigt ist, und wobei ein Klemmbetätigungsmechanismus einschließlich Drehrolle (60; 122; 152) vorgesehen ist, um die der Gurt aufgewickelt ist, und welche auf einer Welle (62; 124; 154) gelagert ist, die von einer Hebelanordnung (66, 68; 130, 156) getragen wird, welche wiederum auf dem Rahmen zur Drehung um eine Achse (70; 132; 158) quer zu den Seitengliedern des Rahmens und parallel zur Achse der Drehrolle gelagert ist, um zu gestatten, daß sich die Drehrolle in einer Richtung bewegt, die die gleiche im Sinne der Ausziehvorrichtung des Gurtes von der Rolle ist, sowie mindestens eine Feder (72; 134; 162), die die Drehrolle in die entgegengesetzte Richtung zwingt, wobei die Anordnung derart ausgelegt ist, daß wenn der Rückzug verriegelt ist, und die auf den Gurt wirkende Ausziehkraft ein vorbestimmtes Niveau übertrifft, die Drehrolle durch den Gurt gegen die auf die Rolle wirkende Federvorspannung bewegt wird und bewirkt, daß der Klemmbetätigungs-Mechanismus die bewegliche Klemmbacke in Richtung auf die festliegende Klemmbacke bewegt wird, wodurch der Gurt zwischen den Backen eingeklemmt wird, um zu verhindern, daß der Gurt vom Rückzug abgezogen wird, dadurch gekennzeichnet, daß die bewegliche Klemmbacke (56; 116; 146) direkt auf dem Rahmen (42; 110; 140) befestigt wird, so daß sie in ihrer Bewegung in Richtung zur festliegenden Klemmbacke (54; 115; 144) und von ihr weg geführt wird, und eine Nockenfläche (56a; 116b; 146b) besitzt, die mit einer Nockenfläche (66a, 122; 152) auf dem Klemmbetätigungsmechanismus in Eingriff bringbar ist, um die bewegliche Backe in Richtung auf die festliegende Backe zu bewegen, wenn der Klemmbetätigungsmechanismus betätigt wird, und daß die Hebelanordnung ein Paar beabstandeter Hebel (66; 130; 156) umfaßt, die an jeder Seite des Rahmens (42; 110; 140) angeordnet und im wesentlichen starr miteinander verbunden sind, und daß die Drehrollenwell (62; 124; 154) von den Hebeln (66; 130; 156) getragen wird, und mit ihren Enden in paßgerechten Führungsschlitzen (76; 126, 160) in den Seitengliedern (44) des Rahmens liegt.

2. Kraftfahrzeugsicherheitsgurtsystem nach Anspruch 1, dadurch gekennzeichnet, daß eine Fläche der Drehrolle (122; 152) mit der Nockenfläche (116b; 146) auf der beweglichen Klemmbacke (116; 146) in Eingriff tritt, um sie in Richtung auf die festliegende Backe (114; 144) zu bewegen.

3. Kraftfahrzeugsicherheitsgurtsystem nach Anspruch 2, dadurch gekennzeichnet, daß die Drehrolle (122) eine geriffelte bzw. gewellte Fläche besitzt, und daß die Nockenfläche (116b) auf der beweglichen Klemmbacke (116), die in Eingriff mit der Drehwelle steht, entsprechend gewellt bzw. geriffelt ist, um die Kraftübertragung von der Drehrolle auf die bewegliche Backe zu verbessern.

4. Kraftfahrzeugsicherheitsgurtsystem nach Anspruch 1, dadurch gekennzeichnet, daß die Nockenflächen (66a) auf den Hebeln (66), die mit den Teilen (56a) der beweglichen Klemmbacke (56) in Eingriff stehen, die Backe in Richtung auf die festliegende Backe (54) bewegen.

5. Kraftfahrzeugsicherheitsgurtsystem nach irgendeinem der vorstehenden Ansprüche, dadurch gekennzeichnet, daß die Welle (62; 127) der Drehrolle bzw. Walze (60; 122) in paßgerechten Führungsschlitzen (64; 128) in den Hebeln (66; 130) aufgenommen wird, die quer zu den Führungsschlitzen (76; 126) in den Seitengliedern des Rahmens liegen.

6. Kraftfahrzeugsicherheitsgurtsystem nach irgendeinem der vorstehenden Ansprüche, dadurch gekennzeichnet, daß mindestens eine Feder (59; 102; 150) die bewegliche Klemmbacke (56; 116; 146) in einer von der festliegenden Klemmbacke (54; 114; 144) wegliegenden Richtung beaufschlagt.

7. Kraftfahrzeugsicherheitsgurtsystem nach irgendeinem der vorstehenden Ansprüche, dadurch gekennzeichnet, daß die bewegliche Backe (56; 116; 146) auf dem Rahmen (42; 110; 140) mittels seitlich nach außen ragender Ansätze (56a; 116a; 146a) befestigt ist, die sich in die Führungsschlitze (58; 118; 148) in den Seitengliedern des Rahmens erstrecken.

8. Kraftfahrzeugsicherheitsgurtsystem nach Anspruch 7, dadurch gekennzeichnet, daß die Größen und Stellungen der Ansätze bzw. Nasen (56a; 116a; 146) und ihre Führungsschlitze (58; 118; 148) derart sind, daß sie das Bewegungsausmaß der beweglichen Backe (56; 116; 146) in Richtung auf die festliegende Backe (54; 114; 144) begrenzen, um zu verhindern, daß übermäßige Klemmkräfte zwischen den Backen auf den Gurt (B) übertragen werden.

9. Kraftfahrzeugsicherheitsgurtsystem nach irgendeinem der vorstehenden Ansprüche, dadurch gekennzeichnet, daß die Hebel (66; 130; 156) miteinander durch ein Kreuzstück (68) verbunden werden, das mit den Hebeln integral ausgebildet ist, so daß die Hebel und das Kreuzstück ein einheitliches, generell U-förmiges Element (66, 68; 130; 156) ausbilden.

10. Kraftfahrzeugsicherheitsgurtsystem nach irgendeinem der vorstehenden Ansprüche, dadurch gekennzeichnet, daß Führungsflächen (163; 140') auf den Seitengliedern des Rahmens (140; 140') angrenzend an die Kanten des Gurtes (B) angeordnet sind, während er von der Drehrolle (152) abläuft und damit in Eingriff tritt, um zu verhindern, daß der Gurt von irgendeiner Seite der Drehrolle bzw. Walze abläuft.

11. Kraftfahrzeugsicherheitsgurtsystem nach irgendeinem der vorstehenden Ansprüche, dadurch gekennzeichnet, daß der Rückzug (40) und die Gurtklemme auf einem gemeinsamen U-förmigen Rahmen (42; 110; 140) befestigt sind.

FIG. 1

FIG. 2

FIG. 3

FIG. 4

FIG. 5

FIG. 7

FIG. 8

FIG. 6

FIG. 9

2